## Europäisches Patentamt

## European Patent Office

## Office européen des brevets

(11) Veröffentlichungsnummer: **0 188 187**
**B1**

## EUROPÄISCHE PATENTSCHRIFT

(45) Veröffentlichungstag der Patentschrift:
27.04.88

(21) Anmeldenummer: **85890285.1**

(22) Anmeldetag: **19.11.85**

(51) Int. Cl.⁴: **C 04 B 7/43,** F 27 B 7/20

(54) **Verfahren und Vorrichtung zur thermischen Behandlung von feinkörnigem Gut, insbesondere zum Brennen von Zementrohmehl.**

(30) Priorität: **11.01.85 AT 57/85**

(43) Veröffentlichungstag der Anmeldung:
**23.07.86 Patentblatt 86/30**

(45) Bekanntmachung des Hinweises auf die Patenterteilung:
**27.04.88 Patentblatt 88/17**

(84) Benannte Vertragsstaaten:
**BE CH DE FR GB IT LI NL SE**

(56) Entgegenhaltungen:
**EP-A-0 078 250**
**EP-A-0 078 786**
**CH-A-601 128**
**DD-A-201 668**
**DD-A-201 669**
**DD-A-204 469**
**DD-A-205 880**
**GB-A-2 146 747**

(73) Patentinhaber: **VOEST- ALPINE Aktiengesellschaft, Muldenstrasse 5, A-4020 Linz (AT)**
Patentinhaber: **VEB Schwermaschinenbau- Kombinat Ernst Thälmann Magdeburg, Marienstrasse 20, DDR- 3011 Magdeburg (DD)**

(72) Erfinder: **Krennbauer, Franz, Ing., Wüstenrotstrasse 7, A-4020 Linz (AT)**
Erfinder: **Fehringer, Friedrich, Ing., Theresienthalstrasse 1, A-3363 Ulmerfeld (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf ein Verfahren zur thermischen Behandlung von feinkörnigem Gut, insbesondere zum Brennen von Zementrohmehl, bei dem das Behandlungsgut in einem mehrstufigen Wärmeaustausch mit Hilfe eines Abgasgemisches aus einem Ofen und einem Reaktionsgefäß in zwei Parallelen Abgassträngen unter einer Gutführung abwechselnd von einer Wärmetauscherstufe des einen zu einer Wärmetauscherstufe des anderen Abgasstranges vorgewärmt wird, bevor es nach einer Erwärmung ausschließlich im Abgasstrom des Ofens dem Reaktionsgefäß und dann dem Ofen zugeführt wird, dessen Abgas nach der Erwärmung des Behandlungsgutes in der dem Reaktionsgefäß hinsichtlich des Gutstromes unmittelbar vorgeordneten Wärmetauscherstufe mit dem Abgas aus dem Reaktionsgefäß zu dem Abgasgemisch für die beiden Abgasstränge vereinigt wird, und auf eine Vorrichtung zur Durchführung des Verfahrens.

Um beim Herstellen von Zement einerseits den Kalzinator nicht in nachteiliger Weise mit den Ofenabgasen beaufschlagen zu müssen und andererseits die höhere Abgastemperatur des Ofens für die Vorwärmung des Rohmehls in der dem Kalzinator unmittelbar vorgeordneten Wärmetauscherstufe ausnützen zu können, ohne den Nachteil in Kauf zu nehmen, daß der eine Abgasstrang des Wärmetauschers ausschließlich mit dem Abgas aus dem Kalzinator und der andere Abgasstrang ausschließlich mit dem Ofenabgas erwärmt wird, ist es bekannt (AT-PS-375 628), den Abgasstrom aus dem Ofen nach einer Wärmeabgabe an das Rohmehl in der dem Kalzinator hinsichtlich des Rohmehlstroms unmittelbar vorgeordneten Wärmetauscherstufe mit dem Abgasstrom aus dem Kalzinator zu vermischen, bevor der Abgasmischstrom gleichmäßig auf die beiden Abgasstränge aufgeteilt wird. Diese Vermischung des Ofenabgases und des Abgases aus dem Kalzinator erfolgt in einer Mischkammer, die zwangsläufig die Bauhöhe vergrößert. Außerdem kann durch die gleichmäßige Aufteilung des Abgasmischstromes auf die beiden Abgasstränge des Wärmetauschers keine Anpassung an unterschiedliche Verhältnisse in den beiden Abgassträngen erreicht werden. Da die Temperatur des Rohmehls, das abwechselnd von einer Wärmetauscherstufe des einen zu einer Wärmetauscherstufe des anderen Abgasstranges bis zum Kalzinator geführt wird, in den Abgassträngen verschieden ist, treten in den beiden Abgassträngen unterschiedliche Bedingungen auf, so daß zur Optimierung des Verfahrens eine Anpassungsmöglichkeit der Abgasströme in den beiden Abgassträngen an die jeweiligen Bedingungen wünschenswert wäre.

Um bei einem Wärmetauscher mit zwei Abgassträngen, von denen einer ausschließlich mit dem Abgas aus dem Kalzinator betrieben wird, im anderen Abgasstrang nicht ausschließlich mit dem Ofenabgas das Auslangen finden zu müssen, ist es bekannt (DD-A-205 880), einen Teil des Kalzinatorabgases mit dem Ofenabgas zu mischen, und zwar nach der Erwärmung des Behandlungsgutes in der dem Kalzinator hinsichtlich des Gutstromes unmittelbar vorgeordneten Wärmetauscherstufe. Bei einer solchen Abgasführung ist trotz der Beimischung von Kalzinatorabgas in das Ofenabgas mit unterschiedlichen Abgasbedingungen in den beiden Abgassträngen zu rechnen, wobei eine Anpassung der Abgasströme in den beiden Abgassträngen an die jeweiligen Verfahrensbedingungen nicht möglich ist. Ähnliches gilt für ein anderes bekanntes Verfahren (EP-A-0 078 250), bei dem dem Ofenabgasstrang des Wärmetauschers ebenfalls Kalzinatorabgas zugemischt wird, allerdings nicht nach der dem Kalzinator unmittelbar vorgeordneten Wärmetauscherstufe, sondern vor dieser Wärmetauscherstufe oder in deren Bereich.

Der Erfindung liegt somit die Aufgabe zugrunde, ein Verfahren der eingangs geschilderten Art so zu verbessern, daß mit einfachen Mitteln die voneinander abweichenden Verhältnisse in den beiden Abgassträngen des Wärmetauschers hinsichtlich der Abgasführung berücksichtigt werden können.

Die Erfindung löst die gestellte Aufgabe dadurch, daß das Abgas dem Reaktionsgefäß in zwei Teilströmen für je einen Abgasstrang entnommen wird und daß diesen Abgasteilströmen aus dem Reaktionsgefäß das Abgas aus dem Ofen in je einem Teilstrom zugeleitet wird.

Durch das Ableiten des Abgases aus dem Reaktionsgefäß in zwei Teilströmen wird die einfache Möglichkeit geschaffen, jedem Abgasstrang des Wärmetauschers einen Abgasmischstrom zuzuleiten, der an die jeweiligen Verhältnisse in diesem Abgasstrang hinsichtlich der Temperatur bzw. der Zusammensetzung angepaßt ist. Den beiden Abgasteilströmen aus dem Reaktionsgefäß können ja unterschiedliche Abgasmengen aus dem Ofen zugeführt werden. Da die durch die Abgasstränge geführte Abgasmenge von der Gebläseleistung des diesen Abgassträngen zugeordneten Gebläses abhängt, bleibt die Abgasmenge in den beiden Abgassträngen trotz eines unterschiedlichen Anteiles an Abgasen aus dem Ofen und aus dem Reaktionsgefäß gleich, was eine gleiche Auslegung der beiden Abgasstränge des Wärmetauschers sicherstellt.

Da außerdem die Abgase aus dem Ofen den Abgasteilströmen aus dem Reaktionsgefäß ohne der Notwendigkeit einer nachträglichen Aufteilung zugemischt werden, erübrigt sich eine Mischkammer, so daß die Bauhöhe in vorteilhafter Weise verringert werden kann.

Besonders günstige Verhältnisse werden erreicht, wenn das Ofenabgas auf die beiden Abgasteilströme aus dem Reaktionsgefäß in einem vorgebbaren Verhältnis aufgeteilt werden. Mit diesem Aufteilungsverhältnis können die jeweils vorteilhaftesten Bedingungen hinsichtlich der Abgastemperatur bzw. der Abgaszusammensetzung in den beiden Abgassträngen erzielt werden, um nicht nur einen vorteilhaften Behandlungsablauf, sondern auch eine geringe Anbackungsgefahr sicherzustellen, die von der Ballaststoffkonzentration und den Temperaturverhältnissen abhängt.

Obwohl dieses Verfahren sich besonders für die Herstellung von Zement eignet, ist dieses Verfahren nicht auf diesen Anwendungsbereich beschränkt. Es kann überall dort angewandt werden, wo feinkörniges Gut einer thermischen Behandlung unterworfen werden muß, und zwar in einem Reaktionsgefäß und in einem nachgeordneten Ofen, wie dies beispielsweise bei der Eisengewinnung möglich ist.

Zur Durchführung des Verfahrens kann von einer Vorrichtung mit einem Ofen, einem dem Ofen vorgeordneten Reaktionsgefäß und mit einem an das Reaktionsgefäß angeschlossenen, mehrstufigen Wärmetauscher für die Gutvorwärmung ausgegangen werden, dessen Wärmetauschereinheiten in zwei parallelen Abgassträngen hintereinandergeschaltet sind, die über je eine Gaszuführungsleitung mit der Gasaustrittsleitung der unmittelbar an die Abgasleitung des Ofens angeschlossenen Wärmetauschereinheit einerseits und mit der Abgasführung des Reaktionsgefäßes anderseits in Verbindung stehen, wobei die Austragsleitung für das Behandlungsgut den Wärmetauschereinheiten des einen Abgasstranges an die Aufgabeleitungen der Wärmetauschereinheiten des anderen Abgasstranges abwechselnd angeschlossen sind. Besteht bei einer solchen bekannten Vorrichtung die Abgasführung des Reaktionsgefäßes aus zwei getrennten, je einen Gutabscheider enthaltenden Abgasleitungen, die mit je einer Gaszuführleitung der Abgasstränge verbunden und über je eine Verbindungsleitung an die Gasaustrittsleitung der dem Ofen unmittelbar vorgeordneten Wärmetauschereinheit angeschlossen sind, so kann die Aufteilung des Abgasstromes aus dem Reaktionsgefäß auf die beiden Abgasstränge des Wärmetauschers unter Zumischung eines Ofenabgases einfach durchgeführt werden, ohne eine Beeinflussung des Abgasmischstromes für den einen Abgasstrang durch die Zusammensetzung des Abgasmischstromes des anderen Abgasstranges befürchten zu müssen. Die Führung der beiden Abgasleitungen aus dem Reaktionsgefäß über je einen Gutabscheider gewährleistet dabei eine besonders niedrige Bauhöhe, weil die Aufteilung des Abgasstromes aus dem Reaktionsgefäß in zwei Teilströme nicht nach dem Abscheider erfolgen muß.

Um bestimmte Mischverhältnisse in den beiden Abgassträngen in einfacher Weise einstellen zu können, können in weiterer Ausbildung der Erfindung die Verbindungsleitungen zwischen der Gasaustrittsleitung der dem Ofen unmittelbar vorgeordneten Wärmetauschereinheit und den Abgasleitungen des Reaktionsgefäßes einstellbare Drosseln, beispielsweise Schieber, aufweisen, mittels der die gemeinsam mit dem Abgas aus dem Reaktionsgefäß über den jeweiligen Abgasstrang des Wärmetauschers ansaugbare Abgasmenge aus dem Ofen bestimmt werden kann.

In der Zeichnung ist eine Vorrichtung zur Durchführung eines erfindungsgemäßen Verfahrens zur thermischen Behandlung von feinkörnigem Gut beispielhaft dargestellt. Es zeigen

Fig. 1 eine erfindungsgemäße Vorrichtung zum Herstellen von Zement in einem Vereinfachten Blockschaltbild und

Fig. 2 eine Konstruktionsvariante dieser Vorrichtung im Bereich der ausschließlich mit den Ofenabgasen beheizten Wärmetauscherstufe.

Das Rohmehl, dessen Fließschema in strichlierten Linien angedeutet ist, wird über eine Aufgabeleitung 1 einem mehrstufigen Wärmetauscher zugeführt, der mit Hilfe der Abgase aus einem Ofen 2 zum Brennen des vorgewärmten und kalzinierten Rohmehls und der Abgase eines dem Drehrohrofen 2 vorgeordneten Reaktionsgefäßes 3 beheizt wird, in dem das Rohmehl durch eine entsprechende Wärmezufuhr entsäuert wird. Dieser Wärmetauscher weist zwei Parallele Abgasstränge 4 und 5 auf, die von den als Zyklonen ausgebildeten Wärmetauschereinheiten 4a, 4b, 4c einerseits und von den Wärmetauschereinheiten 5a, 5b, 5c anderseits gebildet werden. Wie aus dem in vollen Linien dargestellten Fließschema für die Abgasströme entnommen werden kann, sind die Abgasstränge 4 und 5 des Wärmetauschers an zwei Abgasleitungen 7 und 8 des Reaktionsgefäßes 3 angeschlossen, die über je einen als Zyklonabscheider ausgebildeten Gutabscheider 7a, 8a geführt sind. Die Austragsleitungen 9 dieser Gutabscheider 7a und 8a münden im Ofen 2, wo das kalzinierte Rohmehl zu Zementklinker gebrannt wird. Der gebrannte Zementklinker wird dann in einem Kühler 10 abgekühlt, wobei ein Teil der erwärmten Kühlluft dem Ofen 2 als Verbrennungsluft zugeführt wird. Die für die Entsäuerung des Rohmehls im Reaktionsgefäß 3 erforderlichen, zusätzlichen Wärmemengen Werden dem Reaktionsgefäß über einen Brenner 11 zugeführt, für dessen Verbrennungsluft ein Teil der Kühlluft aus dem Kühler 10 Verwendung findet.

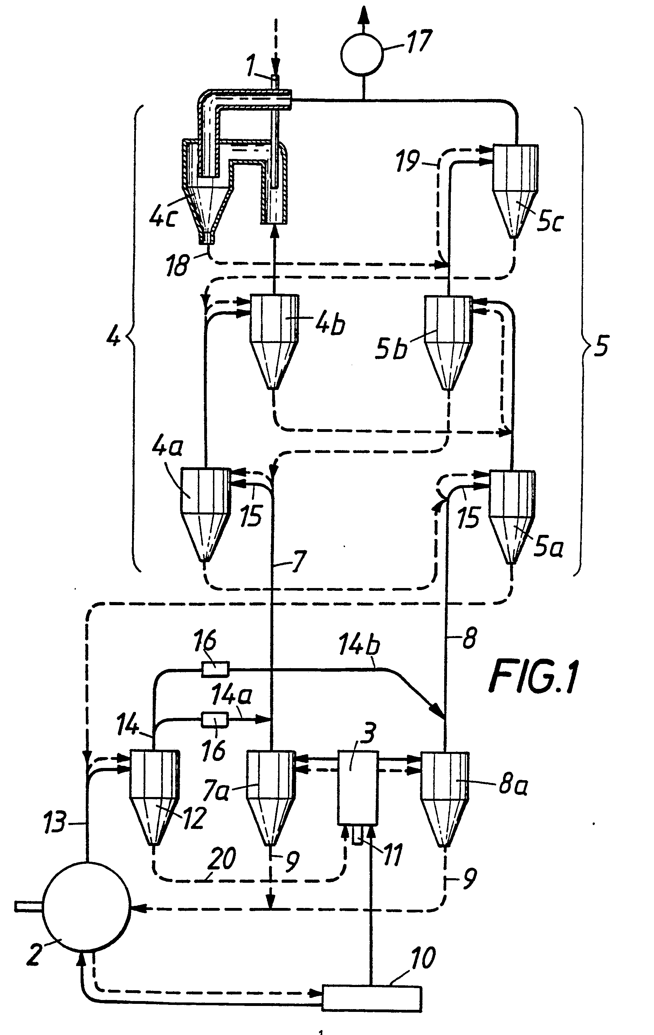

Das in dem Wärmetauscher vorgewärmte Rohmehl wird gemäß Fig. 1 mittels des gegenüber dem Abgas aus dem Reaktionsgefäß 3 heißeren Ofenabgases in einer Wärmetauschereinheit 12, die dem Reaktionsgefäß 3 unmittelbar vorgeordnet ist, auf eine höhere Vorwärmtemperatur gebracht. Zu diesem Zweck ist die Wärmetauschereinneit 12 mit dem Ofen 2 über eine Abgasleitung 13 verbunden. Die Gasaustrittsleitung 14 der unmittelbar an den Ofen angeschlossenen Wärmetauschereinheit 12 ist über je eine Verbindungsleitung 14a und 14b an die Abgasleitungen 7 und 8 des Reaktionsgefäßes 3 angeschlossen, so daß die Gaszuführungsleitung 15 der beiden Abgasstränge 4 und 5 des Wärmetauschers mit einem Gemisch aus den Abgasen des Ofens und des Reaktionsgefäßes beaufschlagt werden, und zwar unter Wahrung eines bestimmten Mischungsverhältnisses für jeden der beiden Abgasstränge 4 und 5. Zur Einstellung dieses Mischungsverhältnisses sind einstellbare Drosseln 16 in den Verbindungsleitungen 14a, 14b vorgesehen, wobei die Drosseln vorteilhaft als Schieber ausgebildet sind. Damit wird es möglich, den Abgasmischstrom für jeden der beiden Abgasstränge 4 und 5 an die jeweiligen Verhältnisse in diesen Abgassträngen gesondert anzupassen, was eine vorteilhafte Verfahrensführung sicherstellt. Nach dem Durchströmen der beiden Abgasstränge 4 und 5 werden die beiden Abgasmischströme wieder zusammengefaßt und mittels eines gemeinsamen Gebläses 17 ins Freie abgeblasen.

Das über die Aufgabeleitung 1 dem Wärmetauscher zugeführte Rohmehl gelangt zunächst in die Wärmetauschereinheit 4c, von der der Rohmehlstrom über die Austragsleitung 18 der Wärmetauschereinheit 5c des anderen Abgasstranges 5 zugeführt wird, in dessen Aufgabeleitung 19 die Austragsleitung 18 mündet. Im folgenden wird der Rohmehlstrom abwechselnd zwischen den Wärmetauschereinheiten der Abgasstränge 4 und 5 hin- und hergeführt, wobei das Rohmehl stufenweise aufgewärmt wird, und zwar in jedem Abgasstrang unter den jeweils günstigsten Bedingungen. Nach der letzten Vorwärmstufe in der Wärmetauschereinheit 12 gelangt der Rohmehlstrom über deren Austragsleitung 20 in das Reaktionsgefäß 3, in dem das Rohmehl unter Wärmezufuhr entsäuert wird. Das kalzinierte Rohmehl wird in zwei Teilströmen entsprechend der Abgasführung aus dem Reaktionsgefäß ausgefördert und gelangt über die Gutabscheider 7a und 8a zum Brennen in den Ofen 2.

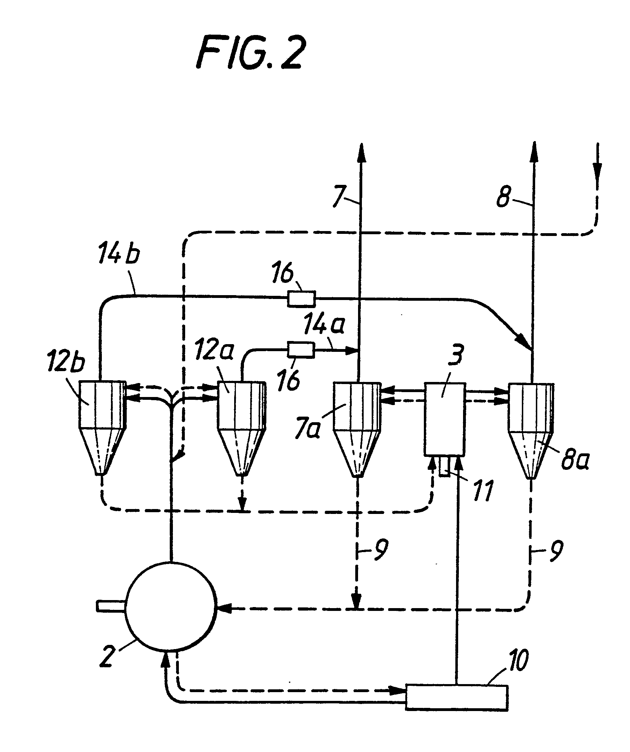

Zum Unterschied zu Fig. 1 weist die Vorrichtung nach Fig. 2 an Stelle der dem Reaktionsgefäß 3 unmittelbar vorgeordneten, durch die Abgase des Ofens 2 beheizten Wärmetauschereinheit 12 eine Wärmetauscherstufe mit zwei parallel nebeneinandergeschalteten Wärmetauschereinheiten 12a und 12b auf, so daß die Verbindungsleitungen 14a und 14b nicht von der Gasaustrittsleitung 14 einer Wärmetauschereinheit 12, sondern von den beiden getrennten Wärmetauschereinheiten 12a und 12b dieser Wärmetauscherstufe ausgehen. Dementsprechend verzweigen sich die Abgasleitung 13 aus dem Ofen 2 und die Austragsleitung für das Behandlungsgut der Wärmetauschereinheit 5a des Abgasstranges 5 auf die beiden Wärmetauschereinheiten 12a, 12b. Das in den beiden Wärmetauschereinheiten 12a, 12b dieser ausschließlich mit dem Ofenabgas beheizten Wärmetauscherstufe erwärmte Behandlungsgut wird dann wieder gemeinsam dem Reaktionsgefäß 3 zugeführt.

**Patentansprüche**

1. Verfahren zur thermisch en Behandlung von feinkörnigem Gut, insbesondere zum Brennen von Zementrohmehl, bei dem das Behandlungsgut in einem mehrstufigen Wärmeaustausch mit Hilfe eines Abgasgemisches aus einem Ofen (2) und einem Reaktionsgefäß (3) in zwei parallelen Abgassträngen (4, 5) unter einer Gutführung abwechselnd von einer Närmetauscherstufe des einen zu einer Wärmetauscherstufe des anderen Abgasstranges (4, 5) vorgewärmt wird, bevor es nach einer Erwärmung ausschließlich im Abgasstrom des Ofens (2) dem Reaktionsgefäß (3) und dann dem Ofen (2) zugeführt wird, dessen Abgas nach der Erwärmung des Behandlungsgutes in der dem Reaktionsgefäß (3) hinsichtlich des Gutstromes unmittelbar vorgeordneten Wärmetauscherstufe mit dem Abgas aus dem Reaktionsgefäß (3) zu dem Abgasgemisch für die beiden Abgasstränge (4, 5) vereinigt wird, dadurch gekennzeichnet, daß das Abgas dem Reaktionsgefäß (3) in zwei Teilströmen für je einen Abgasstrang (4, 5) entnommen wird und daß diesen Abgasteilströmen aus dem Reaktionsgefäß (3) das Abgas aus dem Ofen (2) in je einem Teilstrom zugeleitet wird.

2. Verfahren nach Anspruch 1, dadurch gekennzeichnet, daß das Ofenabgas auf die beiden Abgasteilströme aus dem Reaktionsgefäß (3) in einem vorgebbaren Verhältnis aufgeteilt wird.

3. Vorrichtung zur Durchführung des Verfahrens nach Anspruch 1 oder 2 mit einem Ofen (2), einem dem Ofen (2) vorgeordneten Reaktionsgefäß (3) und mit einem an das Reaktionsgefäß (3) angeschlossenen, mehrstufigen Wärmetauscher für die Gutvorwärmung, dessen Wärmetauschereinheiten (4a, 4b, 4c, 5a, 5b, 5c) in zwei parallelen Abgassträngen (4, 5) hintereinandergeschaltet sind, die über je eine Gaszuführungsleitung (15) mit der Gasaustrittsleitung (14) der unmittelbar an die Abgasleitung (13) des Ofens (2) angeschlossenen Wärmetauschereinheit (12) einerseits und mit der Abgasführung des Reaktionsgefäßes (3) anderseits in Verbindung stehen, wobei die Austragsleitungen (18) für das Behandlungsgut der Wärmetauschereinheiten des einen Abgasstranges (4, 5) an die Aufgabeleitungen (19) der Wärmetauschereinheiten des anderen Abgasstranges (5, 4) abwechselnd angeschlossen sind, dadurch gekennzeichnet, daß die Abgasführung des Reaktionsgefäßes (3) aus zwei getrennten, je einen Gutabscheider (7a, 8a) enthaltenden Abgasleitungen (7, 8) besteht, die mit je einer Gaszuführleitung (15) der Abgasstränge (4, 5) verbunden und über je eine Verbindungsleitung (14a, 14b) an die Gasaustrittsleitung (14) der dem Ofen (2) unmittelbar vorgeordneten Wärmetauschereinheit (12) angeschlossen sind.

4. Vorrichtung nach Anspruch 3, dadurch gekennzeichnet, daß die Verbindungsleitungen (14a, 14b) zwischen der Gasaustrittsleitung (14) der dem Ofen (2) unmittelbar vorgeordneten Wärmetauschereinheit (12) und den Abgasleitungen (7, 8) des Reaktionsgefäßes (3) einstellbare Drosseln (16), beispielsweise Schieber, aufweisen.

## Claims

1. A method for the heat treatment of fine-grain material, more particularly for burning cement raw meal, in which the material for treatment is pre-heated in a multi-stage heat-exchange by means of a waste gas mixture from a kiln (2) and a reactor (3) in two parallel waste gas lines (4, 5), the material being fed alternately from one heat-exchanger stage of one line to a heat-exchanger stage of the other line (4, 5), before it is fed, after heating solely in the waste gas flow of the kiln (2), to the reactor (3) and then the kiln (2), the waste gas of which, after the material for treatment has been heated in the heat-exchanger stage immediately preceding the reactor (3) as considered in the direction of flow of the material, is combined with the waste gas from the reactor (3) to form the waste gas mixture for the two waste gas lines (4, 5), characterised in that the waste gas is taken from the reactor (3) in two sub-flows for each waste gas line (4, 5) and the waste gas from the kiln (2) is fed as a sub-flow in each case to these waste gas sub-flows from the reactor (3).

2. A method according to claim 1, characterised in that the kiln waste gas is divided in a pre-determinable ratio over the two waste gas sub-flows from the reactor (3).

3. Apparatus for performing the method according to claim 1 or 2 comprising a kiln (2), a reactor (3) preceding the kiln (2) and having a multi-stage heat-exchanger connected to the reactor (3) for preheating the material, the heat-exchanger units (4a, 4b, 4c, 5a, 5b, 5c) being connected in series in two parallel waste gas lines (4, 5) each connected via a gas supply line (15) to the gas exit line (14) of the heat-exchanger unit (12) directly connected to the waste gas line (13) of the kiln (2), on the one hand, and to the waste gas system of the reactor (3), on the other hand, the discharge lines (18) for the material for treatment from the heat-exchanger units of one waste gas line (4, 5) being alternately connected to the feed lines (19) of the heat-exchanger units of the other waste gas lines (5, 4), characterised in that the waste gas system of the reactor (3) consists of two separate waste gas lines (7, 8) each containing a material separator (7a, 8a), said lines each being each connected to a gas supply line (15) of the waste gas lines (4, 5) and each being connected via a connecting line (14a, 14b) in to the gas exit line (14) of the heat exchanger unit (12) immediately preceding the kiln (2).

4. Apparatus according to claim 3, characterised in that the connecting lines (14a, 14b) between the gas exit line (14) of the heat-exchanger unit (12) immediately preceding the kiln (2) and the waste gas lines (7, 8) of the reactor (3) contain adjustable restrictors (16), for example, slide valves.

## Revendications

1. Procédé pour le traitement thermique de matière à grains fins, en particulier pour la cuisson de farine de ciment crue, dans lequel la matière à traiter est préchauffée par un échange de chaleur en plusieurs étapes à l'aide d'un mélange de gaz d'échappement provenant d'un four (2) et d'un récipient de réaction (3) dans deux branches de gaz d'échappement (4, 5) parallèles en conduisant alternativement la matière d'un ètage d'échangeur de chaleur d'une des branches de gaz d'échappement (4, 5) à un étage d'échangeur de chaleur de l'autre branche, avant de l'amener après un chauffage dans le courant du gaz d'échappement du four (2) exclusivement, au récipient de réaction (3) et ensuite au four (2), dont le gaz d'échappement, après le chauffage de la matière à traiter dans l'élément d'échange de chaleur situé, relativement au sens de circulation de la matière, immédiatement avant le récipient (3) de réaction, est réuni avec le mélange des gaz d'échappement destiné aux deux branches (4, 5) de gaz d'échappement, caractérise par le fait que le gaz d'échappement est soutiré du réacteur (3) en deux courants partiels dont un pour chaque branche (4, 5) de gaz d'échappement et que le gaz d'échappement provenant du four (2) est conduit, à ces courants partiels de gaz d'échappement provenant du réacteur, en un courant partiel pour chacun.

2. Procédé selon la revendication 1, caractérisé par le fait que le gaz d'échappement du four est distribué aux deux courants partiels des gaz d'échappement provenant du récipient (3) de réaction dans un rapport qui peut être prédéterminé.

3. Dispositif pour la mise en oeuvre du procédé selon la revendiation 1 ou 2 comportant un four (2), un récipient de réaction (3) situé avant le four (2) et un échangeur de chaleur à plusieurs étages, relié au réacteur (3), pour le préchauffage de la matière, dont les éléments (4a, 4b, 4c, 5a, 5b, 5c) d'échange de chaleur sont montés en série en deux branches parallèles (4, 5) de gaz d'échappement, qui communiquent chacune, par l'intermédiaire d'une canalisation d'amenée des gaz (15), avec la canalisation (14) de sortie des gaz de l élément d'échange de chaleur directement raccordé à la canalisation (13) de gaz d'échappement du four (2), d'une part, et avec la conduite des gaz d'échappement du récipient de réaction (3), d'autre part, les canalisations (18) de décharge de la matière à traiter dans les éléments d'échange de chaleur de l'une des branches (4, 5) de gaz d'échappement étant alternativement raccordées aux canalisations (19) de chargement des éléments d'échange de chaleur de l'autre branche (5, 4) de gaz d'échappement, ledit dispositif étant caractérisé par le fait que la conduite des gaz d'échappement du récipient de réaction (3) consiste en deux canalisations distinctes (7, 8) de gaz d'échappement, comprenant chacune un séparateur de matière (7a, 8a), qui sont chacune reliées à une canalisation (15) d'amenée des gaz aux branches (4, 5) de gaz d'échappement et qui sont chacune raccordées, par l'intermédiaire d'une canalisation de raccordement (14a, 14b), à la canalisation (14) de sortie des gaz de l'élément (12) d'échange de chaleur situé immédiatement avant le four (2).

4. Dispositif selon la revendication 3, caractérisé par le fait que les canalisations de raccordement (14a, 14b) présentent, entre la canalisation (14) de sortie des gaz de l'élément (12) d'échange de chaleur situé immédiatement avant le four (2) et les canalisations (7, 8) de gaz d'échappement du récipient de réaction (3), des organes réglables (16) d'étranglement, par exemple des tiroirs.

0 188 187

FIG.1

FIG.2